# EUROPEAN PATENT APPLICATION

(11) **EP 4 738 216 A1**
(43) Date of publication of application: **06.05.2026**
(21) Application number: 24831574.9
(22) Date of filing: 03.06.2024
(51) Int. Cl.: G06Q 10/0635

(54) **DATA CONTROL ASSISTANCE SYSTEM, DATA CONTROL SYSTEM, AND DATA CONTROL ASSISTANCE METHOD**

(30) Priority: 29.06.2023 JP 2023107083
(71) Applicant: Hitachi, Ltd., Tokyo 100-8280 (JP)
(72) Inventor: KONO, Misako, Tokyo 100-8280 (JP); UCHIYAMA, Hiroki, Tokyo 100-8280 (JP); KATO, Atsuya, Tokyo 100-8280 (JP)
(74) Representative: Mewburn Ellis LLP
(86) International application number: PCT/JP2024/020235
(87) International publication number: WO 2025/004704

(57) **Abstract**

[Object] To assist enabling of appropriate control of transmission/reception of data among systems even when a determination criterion for control of transmission/reception of data differs among such systems.

[Solution] A data control assistance system includes a storage device configured to store one or more evaluation categories for data and a control device configured to acquire respective evaluation rules from a plurality of data transmission/reception control systems. The data transmission/reception control systems include a plurality of information processing devices and each storing an evaluation rule for determining control content for data to be transmitted and received among the plurality of information processing devices. The control device also generates a new evaluation rule based on each of the acquired evaluation rules and the evaluation categories. The new evaluation rule includes each of the acquired evaluation rules and is based on the evaluation categories. The control device also transmits the generated new evaluation rule to each of the data transmission/reception control systems.

## Description

### Technical Field

The present invention relates to a data control assistance system, a data control system, and a data control assistance method.

### Background Art

Recently, various types of data such as industrial data, personal data, or the like are used and utilized in business services so as to allow a plurality of fields, lines of business, or enterprises to cooperate with each other. However, when the business services are performed across a plurality of groups as described above, data is shared among groups having a predetermined relationship such as an alliance or a partnership. Thus, for a service or an application used in the service, in some cases, respective data cooperation bases (systems) are built so as to set policies (policies related to handling of the data) different from one group to another to control transmission/reception of the data.

Even when such data cooperation bases are built, it is desirable that the provider and the user of the data can safely exchange data in accordance with their own business policies. For example, it is required that the data user utilize data in compliance with a purpose of use or terms of use of data, that accurate data be transmitted from a data provider, and that trustworthiness among enterprises or of the data be maintained.

In this regard, as a technique to assist control of transmission/reception of data, for example, means for matching metadata on the device side and metadata on the data user side for a plurality of devices is described in PTL 1 (Japanese Unexamined Patent Application Publication No. 2017-167747).

Furthermore, a technique to control access by calculating a risk index from a risk element of data itself, an attribute of a data user, and the relationship between a data provider and the data user is described in PTL 2 (Japanese Unexamined Patent Application Publication No. 2018-142284).

### Citation List

### Patent Literature

PTL 1: Japanese Unexamined Patent Application Publication No. 2017-167747
PTL 2: Japanese Unexamined Patent Application Publication No. 2018-142284

### SUMMARY OF INVENTION

### Technical Problem

When distribution of data is controlled using these techniques, it is considered possible to perform matching between a data user and a data provider by checking metadata of the data, and to control distribution of the data in consideration of risks of the data.

However, such techniques do not particularly assume a case where a data cooperation base to which the data user belongs and a data cooperation base to which the data provider belongs are different. In particular, when the data evaluation methods (policies) differ from one data cooperation base to another, such as a case where the business fields differ from one group to another, it is difficult to perform appropriate data cooperation in accordance with respective policies.

The present invention has been made in view of such a background and has an object to provide a data control assistance system, a data control system, and a data control assistance method that can assist in enabling appropriate transmission/reception control of data among systems even when determination criteria for control of transmission/reception of data differ among systems.

### Solution to Problem

In order to solve the above-described problem, a data control assistance system according to an aspect of the present invention includes a storage device configured to store one or more evaluation categories for data and a control device. The control device is configured to execute an evaluation rule acquisition process that acquires, from a plurality of data transmission/reception control systems, respective evaluation rules. The data transmission/reception control systems include a plurality of information processing devices and each stores an evaluation rule for determining control content for data to be transmitted and received among the plurality of information processing devices. The control device also executes an evaluation rule analysis and generation process that generates a new evaluation rule based on each of the acquired evaluation rules and the evaluation categories. The new evaluation rule includes each of the acquired evaluation rules and is based on the evaluation categories. The control device also executes an evaluation rule transmission process that transmits the generated new evaluation rule to each of the data transmission/reception control systems.

### Advantageous Effects of Invention

According to the present invention, even when determination criteria for control of transmission/reception of data differ among systems, enabling appropriate control of transmission/reception of data among such systems can be assisted.

Configurations, effects, and the like other than the above description are clarified by the following description of embodiments.

### BRIEF DESCRIPTION OF DRAWINGS

[Fig. 1] Fig. 1 illustrates an example of the configuration of a data control system according to an embodiment.
[Fig. 2] Fig. 2 exemplifies hardware included in a data provider calculator and the functions of the data provider calculator.
[Fig. 3] Fig. 3 illustrates examples of data items included in user information of associated information.
[Fig. 4] Fig. 4 illustrates examples of data items included in system information of the associated information.
[Fig. 5] Fig. 5 illustrates examples of data items included in distribution data information of the associated information.
[Fig. 6] Fig. 6 exemplifies hardware included in a data user calculator and the functions of the data user calculator.
[Fig. 7] Fig. 7 exemplifies hardware included in the data distribution control calculator and the functions of the data distribution control calculator.
[Fig. 8] Fig. 8 illustrates an example of a trust evaluation table.
[Fig. 9] Fig. 9 illustrates an example of the trust evaluation table.
[Fig. 10] Fig. 10 illustrates an example of a policy table.
[Fig. 11] Fig. 11 exemplifies hardware included in a common trust management calculator and the functions of the common trust management calculator.
[Fig. 12] Fig. 12 illustrates an example of a category table.
[Fig. 13] Fig. 13 is a sequence diagram exemplifying processing related to control of transmission/reception of target data (hereinafter, referred to as a transmission/reception control process) performed in the data control system in the same data cooperation base and among different data cooperation bases.
[Fig. 14] Fig. 14 illustrates an example of a trust evaluation table editor screen.
[Fig. 15] Fig. 15 is a flowchart illustrating details of an updating process of a trust evaluation table.
[Fig. 16] Fig. 16 is a flowchart illustrating an example of a setting process of a trust score and a corresponding criterion.

### DESCRIPTION OF EMBODIMENTS

### System Configuration

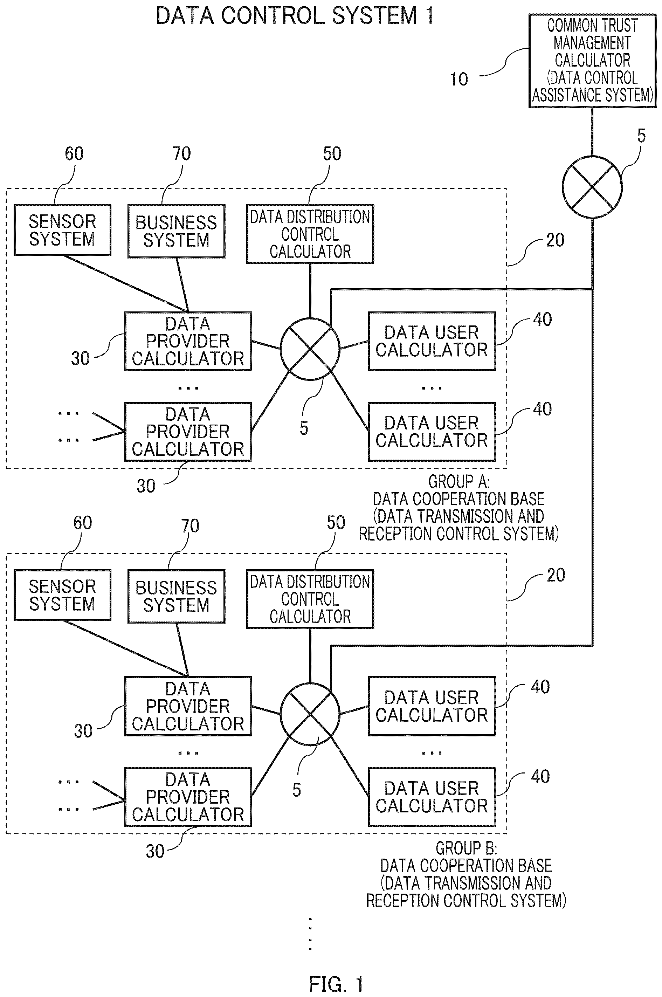

Fig. 1 illustrates an example of the configuration of a data control system 1 according to an embodiment. The data control system 1 includes a common trust management calculator 10 and a plurality of data cooperation bases 20 that are used by an enterprise or the like operating in the fields and relating to each field.

The data cooperation bases 20 are information processing systems (data transmission/reception control systems) for using data to be used by the enterprises each belonging to a corresponding field (hereinafter, referred to as target data) cooperatively among the enterprises. The data cooperation bases 20 are managed by, for example, a system administrator of each field.

Specifically, each data cooperation base 20 includes one or a plurality of data provider calculators 30, one or a plurality of data user calculators 40, and a data distribution control calculator 50.

The data provider calculator 30 is an information processing device managed by an enterprise generating the target data (data provider). The data provider calculator 30 is configured to acquire the target data from a sensor system 60 and a business system 70. Furthermore, the data provider calculator 30 acquires data relating to the target data (hereinafter, referred to as associated information, which will be described in detail later) from the sensor system 60 and the business system 70.

The sensor system 60 is, for example, an Internet of things (IoT) system configured to manage measurement data of a predetermined device, machine, or the like and transmit, to the data provider calculator 30, the measurement data and data related to the measurement data, respectively, as the target data and the associated information. The business system 70 is, for example, a business management system such as enterprise resource planning (ERP) and is configured to transmit information on content of the business to the data provider calculator 30 as the target data or the associated information.

The data user calculator 40 is an information processing device managed by an enterprise that desires the target data (data user). The data user calculator 40 is configured to transmit a predetermined data providing request to the data distribution control calculator 50 and receive the target data, from the data provider calculator 30, based on control of transmission/reception of data by the data distribution control calculator 50.

The data distribution control calculator 50 is configured to control transmission/reception of the target data between the data provider calculator 30 and the data user calculator 40 in the data cooperation base 20 to which this data distribution control calculator 50 belongs.

Specifically, upon reception of the data providing request, the data distribution control calculator 50 calculates an score (trust score) representing the degree of trustworthiness (trust value) of the target data based on an evaluation rule (a trust evaluation table 400 to be described later) for determining control content for the target data transmitted and received between the data provider calculator 30 and the data user calculator 40. The data distribution control calculator 50 also performs control (for example, whether to transmit or receive the target data) on the target data so as to correspond to the trust score. The evaluation rule is associated with a predetermined policy (to be described later) owned by each of the data users or the data providers.

Here, evaluation categories (an evaluation target and the evaluation items) in the evaluation rules defined in the trust evaluation table 400 differ depending on the data cooperation bases 20 (that is, business fields). Accordingly, by collecting and analyzing the trust evaluation table 400 of each data cooperation base 20, the common trust management calculator 10 standardizes the evaluation categories of each individual trust evaluation table 400 so as to allow the target data to be transmitted and received among the data cooperation bases 20, thereby to generate (update) new trust evaluation tables 400 containing each trust evaluation table 400 (update). Each of the updated trust evaluation tables 400 is transmitted to the data distribution control calculator 50 of each data cooperation base 20.

The data cooperation bases 20 and the common trust management calculator 10 are communicably connected via a wired or a wireless communication network 5 such as, for example, the Internet, a local area network (LAN), a wide area network (WAN), or a dedicated line. The information processing devices in each data cooperation base 20 are communicably connected in a similar manner. The information processing devices in the common trust management calculator 10 are communicably connected in a similar manner.

Next, each information processing device in the data control system 1 is described in detail.

### Data Provider Calculators

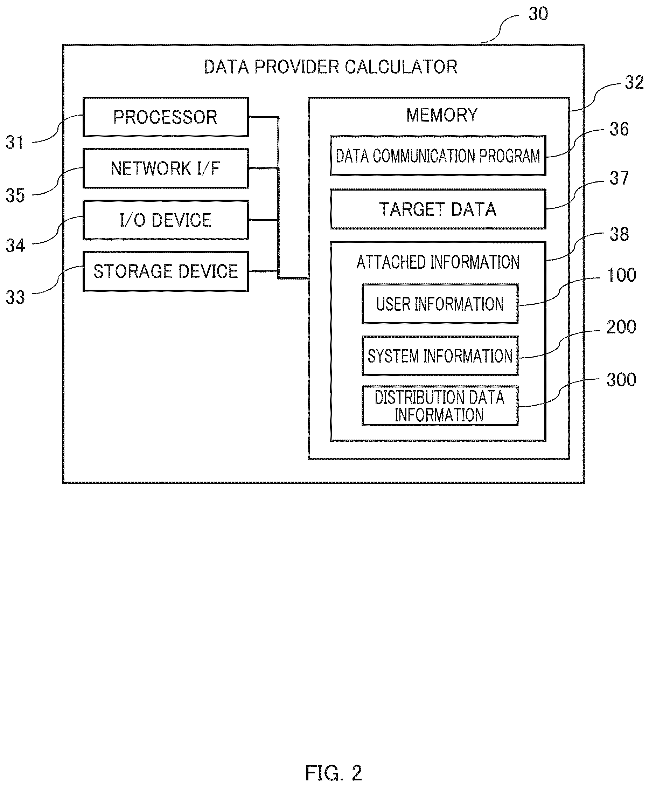

Fig. 2 exemplifies hardware included in each data provider calculator 30 and the functions of the data provider calculator 30.

The data provider calculator 30 includes a processor 31 (control device) such as a central processing unit (CPU), memory 32 such as random access memory (RAM) or read only memory (ROM), a storage device 33 such as a hard disk drive (HDD) or a solid state drive (SSD), an input and output (I/O) device 34 such as a keyboard, a mouse, a touch panel, or a display, and a network interface (I/F) 35 including a network interface card (NIC), a wireless communication module, a universal serial interface (USB) module, a serial communication module, or the like.

The data provider calculator 30 is configured to store pieces of target data 37 and data pieces of associated information 38.

The associated information 38 is data related to the target data 37 and required to calculate an score of trustworthiness (trust score) of the target data 37. The associated information 38 includes an evaluation target and one or a plurality of evaluation items for the evaluation target.

According to the present embodiment, regarding the evaluation target, the associated information 38 includes user information 100, system information 200, and distribution data information 300. The user information 100 is data related to evaluation of a management entity of the target data 37 (for example, an owner, a right holder, or an administrator, and hereinafter, referred to as a target user). The system information 200 is data related to evaluation of the sensor system 60 or the business system 70 (hereinafter, referred to as a target system) that has generated (manages) the target data 37. The distribution data information 300 is data related to evaluation of an attribute of the target data 37 (hereinafter, referred to as a data attribute).

The data provider calculator 30 also stores a data communication program 36.

The data communication program 36 acquires the target data 37 from the sensor system 60 and the business system 70. The data communication program 36 transmits the target data 37 to the data user calculator 40.

### User Information

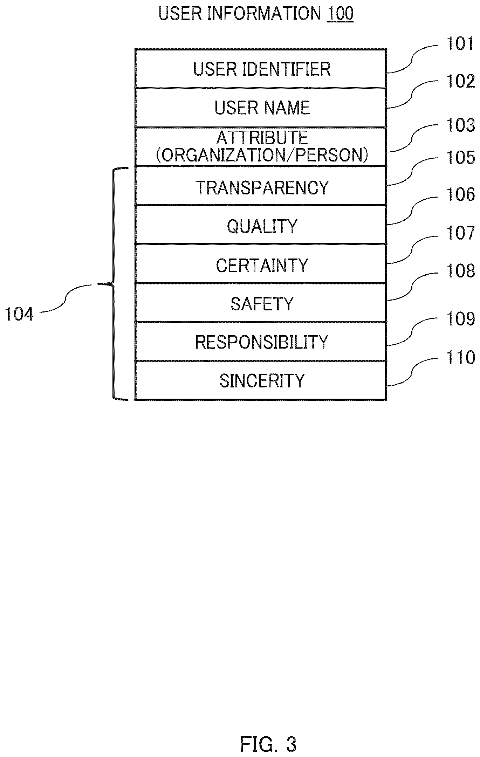

Here, Fig. 3 illustrates examples of data items included in the user information 100 of the associated information 38. The user information 100 includes the following data items: a user identifier 101 in which an identifier of each user as the evaluation target (target user) is set; a user name 102 in which the name of each user is set; an attribute 103 in which the attribute of each user is set; and evaluation items 104 in which the evaluation items related to each user are set.

The evaluation items 104 specifically include each of the following data items: transparency 105 in which content of evaluation items related to transparency (transparency evaluation items) of the business by each user is set; quality 106 in which content of evaluation items related to quality (quality evaluation items) of the business by each user is set; certainty 107 in which content of evaluation items related to certainty (certainty evaluation items) of the business by each user is set; safety 108 in which content of evaluation items related to safety (safety evaluation items) of the business by each user is set; responsibility 109 in which content of evaluation items related to responsibility content (responsibility evaluation items) of each user is set; and sincerity 110 in which content of evaluation items related to sincerity (sincerity evaluation items) of the user is set.

### System Information

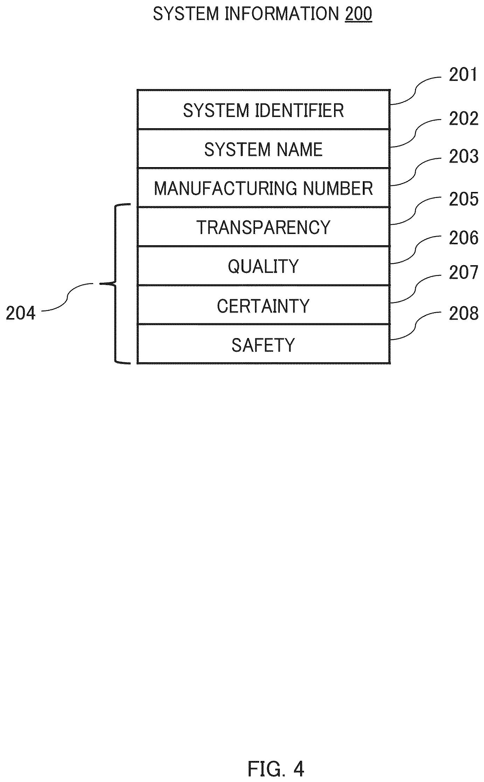

Fig. 4 illustrates examples of data items included in the system information 200 of the associated information 38. The system information 200 includes each of the following data items: a system identifier 201 in which an identifier of each system as the evaluation target (target system) is set; a system name 202 in which the name of each system is set; a manufacturing number 203 in which the number of each system is set; and evaluation items 204 in which the evaluation items related to each system are set.

The evaluation items 204 specifically include each of the following data items: transparency 205 in which content of transparency evaluation items of each system is set; quality 206 in which content of quality evaluation items of each system is set; certainty 207 in which content of certainty evaluation items of each system is set; and safety 208 in which content of safety evaluation items of each system is set.

### Distribution Data Information

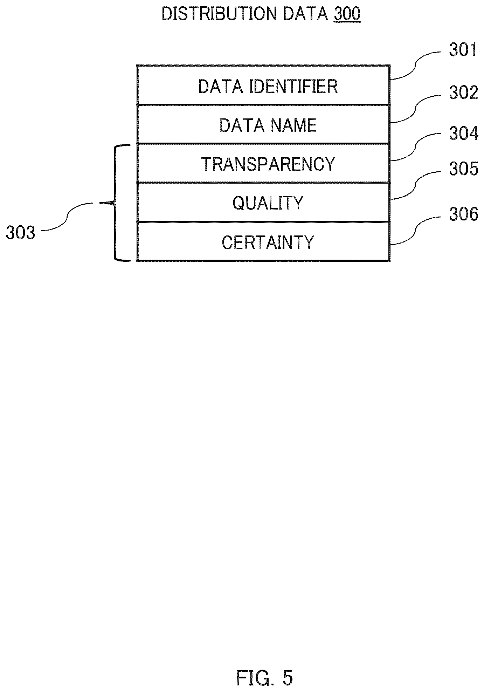

Fig. 5 illustrates examples of data items included in the distribution data information 300 of the associated information 38. The distribution data information 300 includes each of the following data items: a system identifier 301 in which an identifier of each piece of the target data related to the data attribute as the evaluation target is set; a data name 302 in which the name of each piece of the target data is set; and evaluation items 303 in which the evaluation items related to each data attribute is set.

The evaluation items 303 specifically include each of the following data items: transparency 304 in which content of transparency evaluation items of each data attribute is set; quality 305 in which content of quality evaluation items of each data attribute is set; and certainty 306 in which content of certainty evaluation items of each data attribute is set.

### Data User Calculators

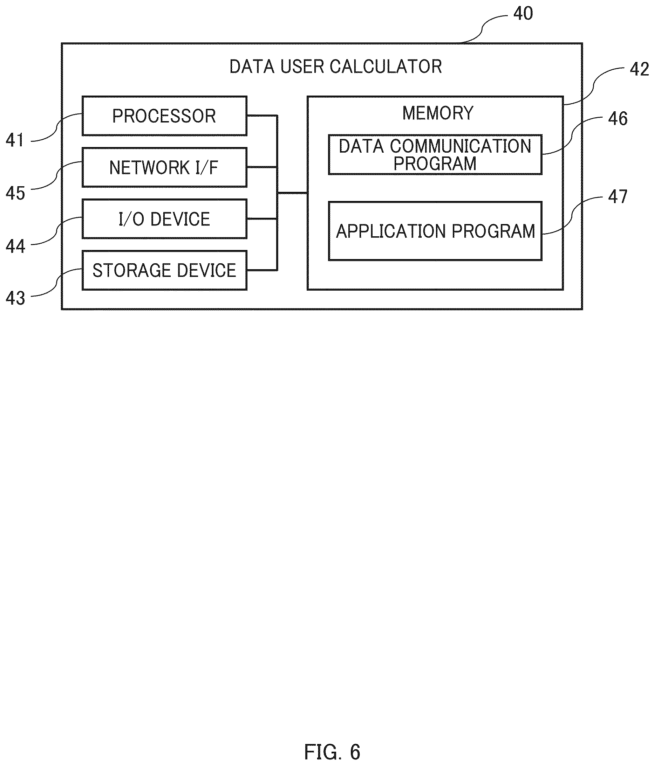

Next, Fig. 6 exemplifies hardware included in the data user calculator 40 and the functions of the data user calculator 40.

The data user calculator 40 includes a processor 41 (control device) such as a CPU, memory 42 such as RAM or ROM, a storage device 43 such as an HDD or an SSD, an I/O device 44 such as a keyboard, a mouse, a touch panel, or a display, and a network I/F 45 including an NIC, a wireless communication module, a USB module, a serial communication module, or the like.

The data user calculator 40 stores a data communication program 46 and an application program 47.

The data communication program 46 receives the target data 37 from the data provider calculator 30.

The application program 47 performs predetermined processing based on the target data 37 received from the data user calculator 40.

### Data Distribution Control Calculator

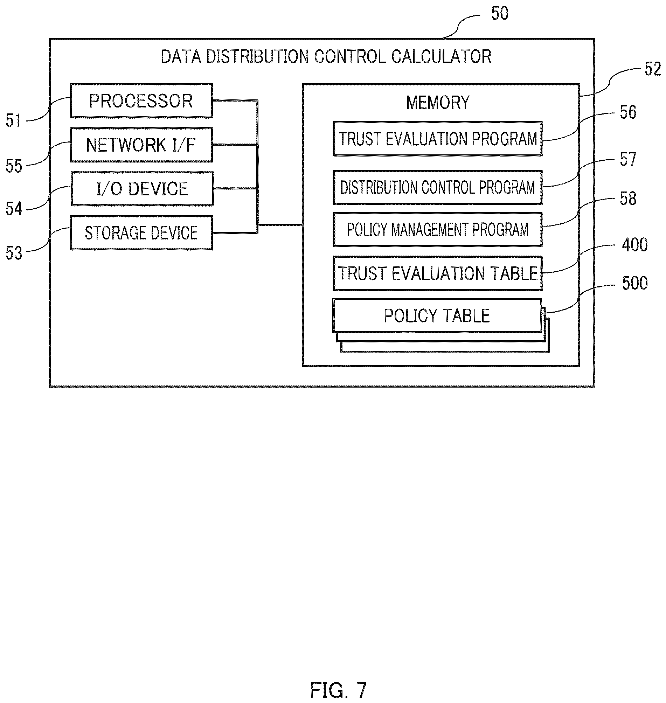

Next, Fig. 7 exemplifies hardware included in the data distribution control calculator 50 and the functions of the data distribution control calculator 50.

The data distribution control calculator 50 includes a processor 51 (control device) such as a CPU, memory 52 such as RAM or ROM, a storage device 53 such as an HDD or an SSD, an I/O device 54 such as a keyboard, a mouse, a touch panel, or a display, and a network I/F 55 including an NIC, a wireless communication module, a USB module, a serial communication module, or the like.

The data distribution control calculator 50 stores the trust evaluation table 400 and a policy table 500.

The trust evaluation table 400 is data in which the target of trust evaluation, the evaluation item related to the evaluation target, the trust score corresponding to the evaluation target and an evaluation criterion, and a policy corresponding to the trust score are associated with one another.

The policy table 500 is data in which policies as criteria related to the trust scores are stored. Specifically, the policies are data of determination criteria necessary to determine, using the trust scores, the control content of the target data 37 (for example, whether to transmit the target data) between the data provider calculator 30 and the data user calculator 40. The policies include, for example, a provision policy as a criterion based on the operation of the data provider, a user policy as a criterion based on the operation of the data user, and an administrative policy as a criterion based on the operation of the system administrator in an individual field. Hereinafter, although the policy table 500 stores the user policies according to the present embodiment, this is not particularly limiting.

### Trust Evaluation Table

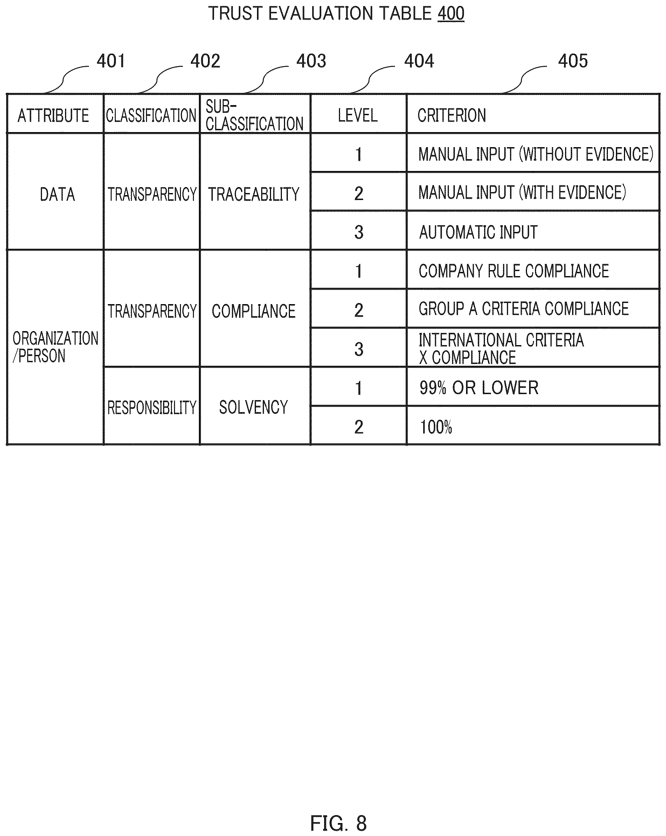

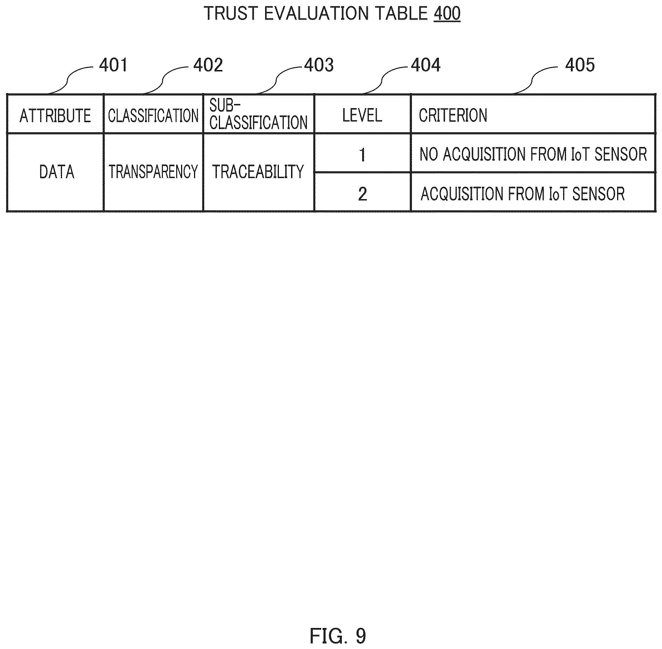

Here, Figs. 8 and 9 each illustrate an example of the trust evaluation table 400. The trust evaluation table 400 includes each of the following data items: an attribute 401 in which the evaluation target related to the target data (for example, a target system, a target user, or a data attribute) is set; a classification 402 in which the evaluation item related to the evaluation target (for example, a transparency evaluation item or a responsibility evaluation item) is set; a sub-classification 403 in which a sub-item of the evaluation item (for example, traceability, compliance, or solvency) is set; a level 404 in which the trust score corresponding to an evaluation identified by the attribute 401, the classification 402, and the sub-classification 403 is set; and a criterion 405 in which content of the policy corresponding to the trust score (hereinafter, referred to as a corresponding criterion) indicated by the level 404 is set.

Regarding the level 404 and the criterion 405, specifically, a case where a trust evaluation level of a certain piece of the target data is a trust evaluation level indicated by the level 404 corresponds to the fact that the policy (of the data user) is a policy indicated by the criterion 405.

In the example illustrated in Fig. 8, in a case where a certain piece of the target data is a manually input piece of data (without evidence), the trust evaluation level of the items of "TRANSPARENCY" and "TRACEABILITY" for the data attribute of this piece of target data is "1".

Content of the trust evaluation table 400 is preset (although updated by the common trust management calculator 10 as will be described later) based on, for example, social criteria (such as international standards, group criteria, and implicit social rules). The trust evaluation table 400 is preset by, for example, the data provider, the data user, or the administrator of each field. The trust evaluation table 400 may be updated by the data user whenever necessary.

The content of the trust evaluation table 400 differs depending on the field. However, as will be described later, the data items fall within ranges of the evaluation categories defined by a category table 600 (the evaluation target and the evaluation items).

### Policy Table

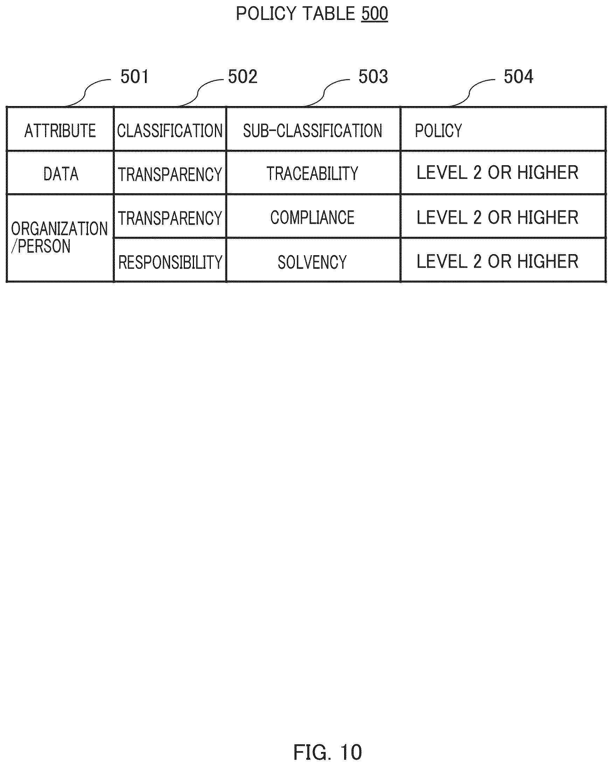

Next, Fig. 10 illustrates an example of the policy table 500. The policy table 500 includes each of the following data items: an attribute 501 in which the evaluation target in the trust evaluation (for example, target data, a target user, or a data attribute) is set; a classification 502 in which the evaluation item for the evaluation target (for example, a transparency evaluation item or a responsibility evaluation item) is set; a sub-classification 503 in which a sub-item of the evaluation item (for example, traceability, compliance, or solvency) is set; and a policy 504 in which a value that is a trust score related to the evaluation category related to the attribute 501, the classification 502, and the sub-classification 503 and that is a criterion to determine the control of transmission/reception of the target data (hereinafter, referred to as a trust score threshold) is set.

According to the present embodiment, the trust score threshold is a minimum value (threshold) of the trust score necessary to transmit the target data from the data provider calculator 30 to the data user calculator 40. That is, in the example illustrated in Fig. 10, when the trust score related to the "DATA (ATTRIBUTE)", the "TRANSPARENCY", and the "TRACEABILITY" of the target data is "2" or higher, the data distribution control calculator 50 directs the target data to be transmitted from the data provider calculator 30 to the data user calculator 40.

Next, as illustrated in Fig. 7, the data distribution control calculator 50 stores a trust evaluation program 56, a distribution control program 57, and a policy management program 58.

Upon reception of a data providing request for target data from the data user calculator 40, the trust evaluation program 56 calculates the trust score of the target data based on the trust evaluation table 400 and the associated information 38.

The distribution control program 57 controls the transmission/reception of the target data from the data provider calculator 30 to the data user calculator 40 based on the trust score calculated by the trust evaluation program 56 and the policy table 500. For example, the distribution control program 57 transmits the target data from the data provider calculator 30 to the data user calculator 40 when the trust score related to a certain evaluation category calculated by the trust evaluation program 56 exceeds a threshold for trust evaluation.

The trust evaluation program 56 may be included in the distribution control program 57.

The policy management program 58 collects and manages the policy tables 500 owned by each data user calculator 40. The policy management program 58 may accept input of the policy table 500 from the data user, data provider, or the administrator.

### Common Trust Management Calculator

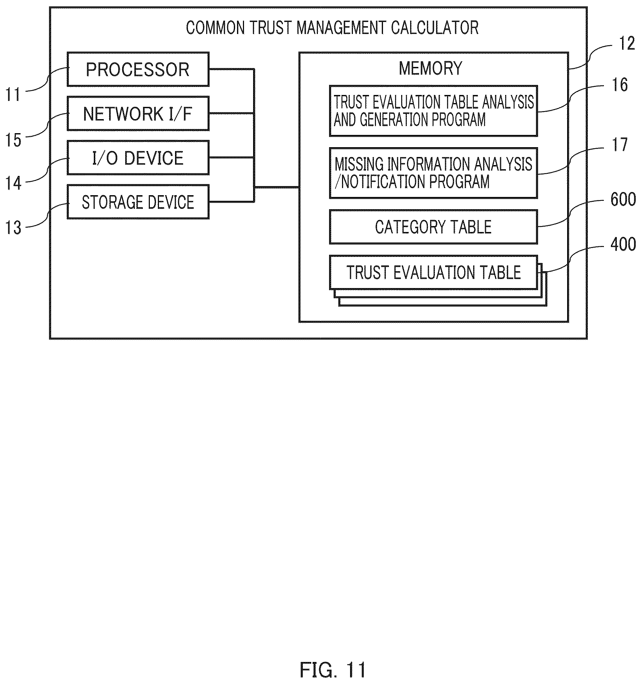

Next, Fig. 11 exemplifies hardware included in the common trust management calculator 10 and the functions of the common trust management calculator 10.

The common trust management calculator 10 includes a processor 11 (control device) such as a CPU, memory 12 such as RAM or ROM, a storage device 13 such as an HDD or an SSD, an I/O device 14 such as a keyboard, a mouse, a touch panel, or a display, and a network I/F 15 including an NIC, a wireless communication module, a USB module, a serial communication module, or the like.

The common trust management calculator 10 stores the category table 600 and the trust evaluation tables 400 acquired from each data distribution control calculator 50.

### Category Table

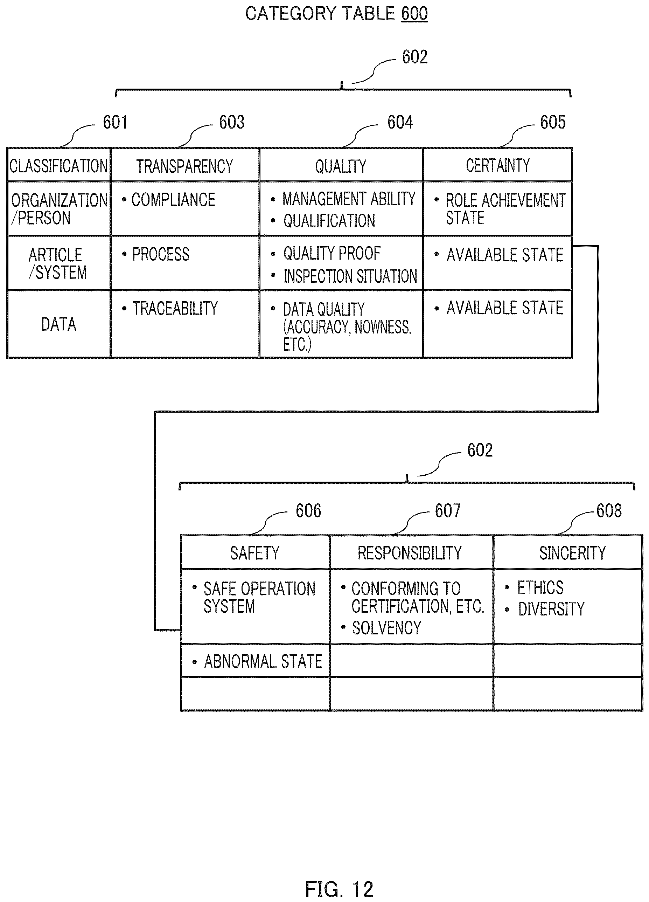

Fig. 12 illustrates an example of the category table 600. The category table 600 comprehensively defines the evaluation target and the evaluation items (evaluation categories) required to perform the trust evaluation. That is, the category table 600 serves as definition information of the evaluation categories including all the evaluation categories included in the trust evaluation table 400 of each of the data cooperation bases 20 (including all the business fields).

Specifically, the category table 600 includes each of the following data items: a classification 601 in which the evaluation target (for example, the target user, the target system, and the data attribute) is set; and evaluation items 602 in which the evaluation items related to the evaluation target are set.

Specifically, the evaluation items 602 include each of the following data items: a transparency 603 in which the transparency evaluation items are set; a quality 604 in which quality evaluation items are set; a certainty 605 in which certainty evaluation items are set; a safety 606 in which safety evaluation items are set; a responsibility 607 in which responsibility evaluation items are set; and a sincerity 608 in which sincerity evaluation items are set.

In the safety 606, only the evaluation items for the target user and the target system are set. In the responsibility 607 and the sincerity 608, only the evaluation items for the target user are set.

The category table 600 is created in advance by, for example, input by the administrator.

The functions of functional units of each information processing device in the data control system 1 having been described are implemented when the processor reads the programs from the memory or the storage device. The programs can be distributed by, for example, being recorded in a portable recording medium or a fixed recording medium. All or a subset of these programs may be implemented by using virtual information processing resources provided by using a virtualization technique, a process space isolation technique, or the like, such as, for example, a virtual server provided by a cloud system. All or a subset of these programs may be implemented by, for example, a service provided by a cloud system via an application programming interface (API) or the like.

Next, processing performed in the data control system 1 is described.

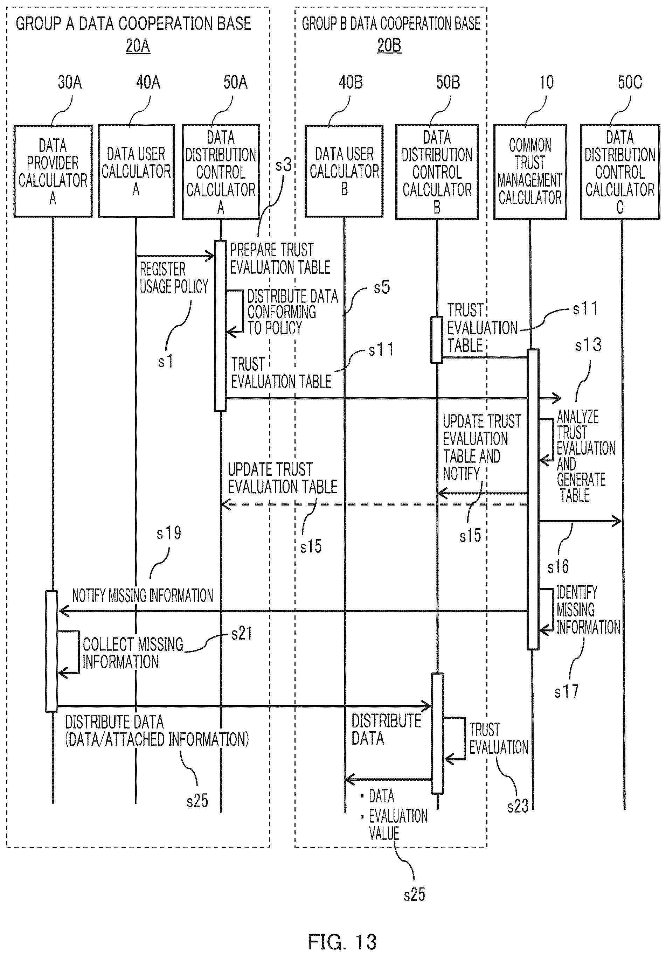

Fig. 13 is a sequence diagram exemplifying processing related to control of transmission/reception of the target data (hereinafter, referred to as a transmission/reception control process) performed in the data control system 1 in the same data cooperation base 20 and among different data cooperation bases 20.

First, in a data cooperation base 20A, a data user calculator 40A generates and stores the information on policy (policy table 500). For example, the data user calculator 40A accepts input of the information of policy from the data user.

Subsequently, the data user calculator 40A transmits the generated policy table 500 to a data distribution control calculator 50A (s1). The data distribution control calculator 50A generates and stores the trust evaluation table 400 (s3).

### Trust Evaluation Table Editor Screen

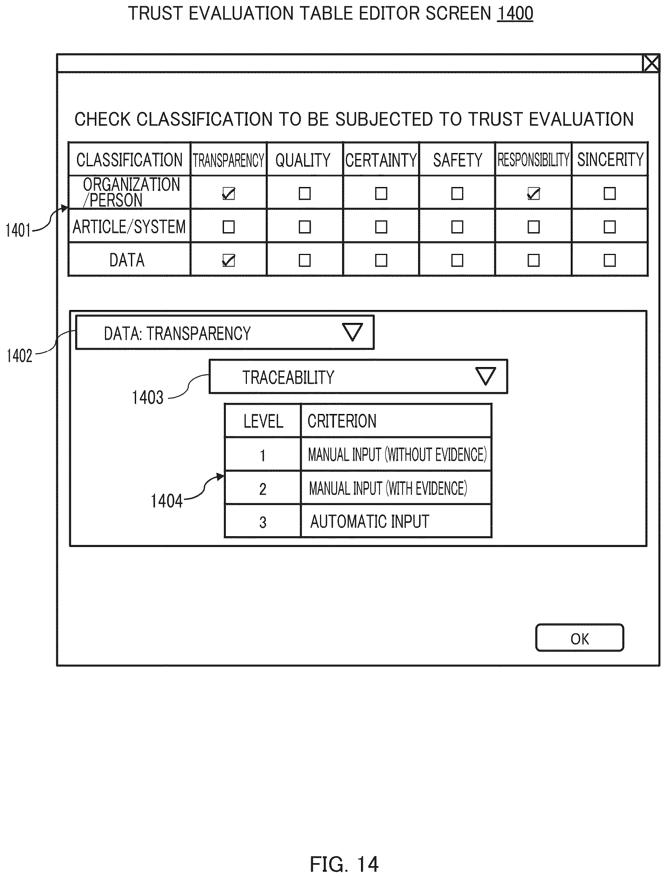

Here, Fig. 14 illustrates an example of a trust evaluation table editor screen 1400 that is displayed in processing in s3 and accepts input to the trust evaluation table 400.

The trust evaluation table editor screen 1400 includes category selection boxes 1401, a classification selection box 1402, a sub-classification selection box 1403, and policy editing boxes 1404. The category selection boxes 1401 accept selection input of the evaluation targets (target system, target user, data attribute) and the evaluation items (transparency evaluation item, quality evaluation item) of the trust evaluation table 400 to be generated. The classification selection box 1402 and the sub-classification selection box 1403 respectively accept the selection of the evaluation target to be edited and the selection of the evaluation item to be edited among the evaluation targets and the evaluation items selected in the category selection boxes 1401. The policy editing boxes 1404 accept input of the trust evaluation level and corresponding criterion corresponding to the evaluation target and the evaluation item selected in the classification selection box 1402 and the sub-classification selection box 1403.

Although the trust evaluation table editor screen 1400 is displayed on a screen of the data distribution control calculator 50 according to the present embodiment, alternatively the trust evaluation table editor screen 1400 may be displayed in the data provider calculator 30, the data user calculator 40, or the like (e.g., the data user or the administrator may create the trust evaluation table 400).

Subsequently, as illustrated in Fig. 13, upon reception of a data providing request for the target data held by a data provider calculator 30A in the data cooperation base 20A from the data user calculator 40 in the data cooperation base 20A, the data distribution control calculator 50A calculates the trust score of the target data on an evaluation category basis (on an evaluation target and evaluation item basis) based on the associated information 38 of the target data and the trust evaluation table 400. The data distribution control calculator 50A causes the data provider calculator 30A to transmit to the data user calculator 40A the target data to which information of the calculated each trust score is added (s5).

In so doing, the data distribution control calculator 50A performs control of transmission/reception of the data corresponding to the calculated trust scores. According to the present embodiment, the data distribution control calculator 50A executes the above-described transmission of the target data only when, for a certain evaluation category, the calculated trust score exceeds the threshold for trust evaluation indicated by the policy table 500 received in s1.

By performing the above-described processing in s1 to s5, the control of transmission/reception of the target data is performed between the data provider calculator 30A and the data user calculator 40A in the same data cooperation base 20A.

Meanwhile, each of the data distribution control calculators 50 in the data control system 1 (data distribution control calculators 50A and 50B) respectively transmit the trust evaluation tables 400 held by the data distribution control calculators 50A and 50B to the common trust management calculator 10 at set times (for example, predetermined time, predetermined intervals, or specification by the administrator) (s11).

The common trust management calculator 10 executes, based on each of the received trust evaluation tables 400 and the category table 600, a trust evaluation table updating process to generate a new trust evaluation table 400 into which each of the trust evaluation tables 400 are integrated (s13).

The common trust management calculator 10 transmits the generated trust evaluation tables 400 to each data distribution control calculator 50 (s15). Each data distribution control calculator 50 updates the existing trust evaluation table 400 with the received trust evaluation table 400. The data distribution control calculator 50 may accept input of whether to select update.

Upon detection of a new data cooperation base 20 to and from which the target data is transmitted and received (for example, upon reception of predetermined request information from a new data cooperation base 20), the common trust management calculator 10 may transmit, to the data distribution control calculator 50 of this data cooperation base 20, the trust evaluation table 400 generated in s13 (s16).

Furthermore, the common trust management calculator 10 compares the trust evaluation table 400 updated in s13 and the trust evaluation table 400 received in s11 (before the update) with each other to identify policy information missing in the trust evaluation table 400 received in s11 (hereinafter, referred to as missing information) (s17).

Specifically, the common trust management calculator 10 extracts information not included in the criterion 405 of the trust evaluation table 400 received in s11 from each piece of information of the criterion 405 of the trust evaluation table 400 updated in s13.

For example, when the policy associated with the evaluation categories of "DATA", "TRANSPARENCY", and "TRACEABILITY" in the trust evaluation table 400 updated in s13 is "AUTOMATIC INPUT (without IoT SENSOR)" and "AUTOMATIC INPUT (with IoT SENSOR)", and the policy associated with the evaluation categories of "DATA", "TRANSPARENCY", and "TRACEABILITY" in the trust evaluation table 400 received in s11 is "AUTOMATIC INPUT", the missing information is "without IoT SENSOR" and "with IoT SENSOR".

The common trust management calculator 10 transmits a request to collect missing information (collection request) to each data provider calculator 30 (s19).

The data provider calculators 30, having received the collection request, acquire data on which the missing information is based (for example, measurement data of sensor as the IoT data) (s21). The data provider calculators 30 may receive the missing information from the sensor system 60, the business system 70, or an information processing system published on the Internet or the like.

Subsequently, upon reception of a data providing request for the target data held by the data provider calculator 30A in the data cooperation base 20A from a data user calculator 40B in a data cooperation base 20B, the data distribution control calculator 50B in the data cooperation base 20B calculates the trust score of the target data on an evaluation category basis (on an evaluation target and evaluation item basis) based on the associated information 38 of the target data and the trust evaluation table 400 updated in s15 (s23). The data distribution control calculator 50B causes the target data to which information of each of the calculated trust scores is added to be transmitted from the data provider calculator 30A to the data user calculator 40B corresponding to the policy (s25).

In so doing, the data distribution control calculator 50B controls transmission/reception of the data corresponding to the calculated trust scores. According to the present embodiment, the data distribution control calculator 50B executes the above-described transmission of the target data only when, for a certain evaluation category, the calculated trust score exceeds the threshold for trust evaluation indicated by the policy table 500 received in s1.

By performing the above-described processing in s11 to s25, transmission/reception of the target data among different data cooperation bases 20 can be controlled.

### <Trust Evaluation Table Updating Process>

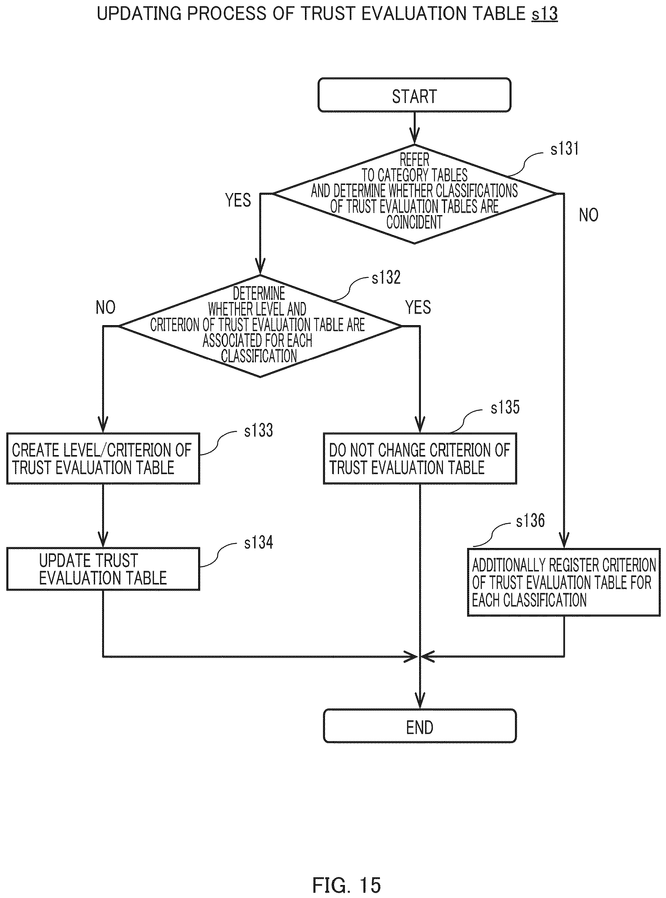

Fig. 15 is a flowchart illustrating details of a trust evaluation table updating process s13.

A trust evaluation table analysis and generation program 16 selects one of the evaluation targets (for example, a target system, a target user, and a data attribute) and, for the selected evaluation target, compares a plurality of trust evaluation tables (here, a first trust evaluation table 400 and a second trust evaluation table 400).

First, the trust evaluation table analysis and generation program 16 determines whether the evaluation items and the evaluation sub-items of the second trust evaluation table 400 (specifically, content of the classification 402 and the sub-classification 403) include (are coincident with) the evaluation items and the evaluation sub-items of the first trust evaluation table 400 (specifically, content of the classification 402 and the sub-classification 403) (s131). For example, the trust evaluation table analysis and generation program 16 checks whether the evaluation items are "TRANSPARENCY" and "RESPONSIBILITY" in both the trust evaluation tables, and the evaluation sub-items are "TRACEABILITY", "COMPLIANCE", and "SOLVENCY" in both the trust evaluation tables.

If the evaluation items and the evaluation sub-items of the second trust evaluation table 400 include the evaluation items and the evaluation sub-items of the first trust evaluation table 400 (s131: YES), the trust evaluation table analysis and generation program 16 executes processing in s132. If it is not the case in which the evaluation items and the evaluation sub-items of the second trust evaluation table 400 include all the evaluation items and all the evaluation sub-items of the first trust evaluation table 400 (s131: NO), the trust evaluation table analysis and generation program 16 executes processing in s136.

In s136, the trust evaluation table analysis and generation program 16 adds content of evaluation items and content of evaluation sub-items of the first trust evaluation table 400 not included in the second trust evaluation table 400 to the second trust evaluation table 400. Subsequently, the updating process of a trust evaluation table s13 ends.

In s132, by identifying the difference and the inclusion relationship of the elements for each evaluation item and the evaluation sub-item, the trust evaluation table analysis and generation program 16 compares the combinations of the trust scores and the corresponding criteria between the first trust evaluation table 400 and the second trust evaluation table 400. That is, the trust evaluation table analysis and generation program 16 determines whether the combinations of the trust scores and the corresponding criteria related to the second trust evaluation table 400 correspond to the combinations of the trust scores and the corresponding criteria of the first trust evaluation table 400.

For example, for the classification "TRANSPARENCY" and the sub-classification "TRACEABILITY", the trust evaluation table analysis and generation program 16 compares a combination of "Level 1" and "MANUAL INPUT WITHOUT EVIDENCE" and a combination of "Level 2" and "MANUAL INPUT WITH EVIDENCE" of the first trust evaluation table 400 and a combination of "Level 1" and "NO ACQUISITION FROM IoT SENSOR" and a combination of "Level 2" and "NO ACQUISITION FROM IoT SENSOR" of the second trust evaluation table 400. Then, the trust evaluation table analysis and generation program 16 determines that "Without manual input" corresponds to "AUTOMATIC INPUT" and "AUTOMATIC INPUT" includes "ACQUISITION FROM IoT SENSOR" and "NO ACQUISITION FROM IoT SENSOR". Furthermore, the trust evaluation table analysis and generation program 16 determines that "WITH EVIDENCE" is higher than "WITHOUT EVIDENCE" in trust evaluation level (because of addition of "EVIDENCE"), and "ACQUISITION FROM IoT SENSOR" is higher than "NO ACQUISITION FROM IoT SENSOR" in trust evaluation level (because of addition of "IoT SENSOR"). Consequently, the trust evaluation table analysis and generation program 16 determines that the four combinations described above do not correspond to each other (do not have a combination of the same trust evaluation level and the same corresponding criteria).

If the combinations of the trust scores and the corresponding criteria related to the second trust evaluation table 400 correspond to the combinations of the trust scores and the corresponding criteria of the first trust evaluation table 400 (YES in s132), the trust evaluation table analysis and generation program 16 executes processing in s135. If the combinations of the trust scores and the corresponding criteria related to the second trust evaluation table 400 correspond to the combinations of the trust scores and the corresponding criteria of the first trust evaluation table 400 (NO in s132), the trust evaluation table analysis and generation program 16 executes processing in s133.

In s135, the trust evaluation table analysis and generation program 16 determines that it is not required to change the second trust evaluation table 400 and the trust evaluation table updating process s13 ends.

In s133, for the combinations without correspondence, the trust evaluation table analysis and generation program 16 updates the combinations of the trust scores and the corresponding criteria related to the first trust evaluation table 400 and the second trust evaluation table 400 such that the combinations of the trust scores and the corresponding criteria related to the second trust evaluation table 400 correspond to the combinations of the trust scores and the corresponding criteria related to the first trust evaluation table 400 (s134) and the trust evaluation table updating process s13 ends.

For example, in the first trust evaluation table 400 and the second trust evaluation table 400, the trust evaluation table analysis and generation program 16 sets "MANUAL INPUT WITHOUT EVIDENCE" to level 1 of the trust evaluation, "MANUAL INPUT WITH EVIDENCE" to level 2 of the trust evaluation, "AUTOMATIC INPUT (without IoT SENSOR)" to level 3 of the trust evaluation, and "AUTOMATIC INPUT (with IoT SENSOR)" to level 4 of the trust evaluation. In this way, with the first trust evaluation table 400 and the second trust evaluation table 400, determination to the same trust evaluation levels with the common corresponding criteria can be performed (the first trust evaluation table 400 and the second trust evaluation table 400 are substantially integrated).

The trust evaluation table analysis and generation program 16 repeatedly performs the above-described processing in s131 to s136 on all the evaluation targets (for example, the target system, target user, and the data attribute).

The determination of the correlation (correspondence, inclusion, and the like) between the trust evaluation levels and the corresponding criteria and the updating of the trust evaluation table 400 described in s132 to s135 may be, for example, performed based on the determination (input setting) by the administrator, or automatically performed based on a predetermined algorithm by the trust evaluation table analysis and generation program 16.

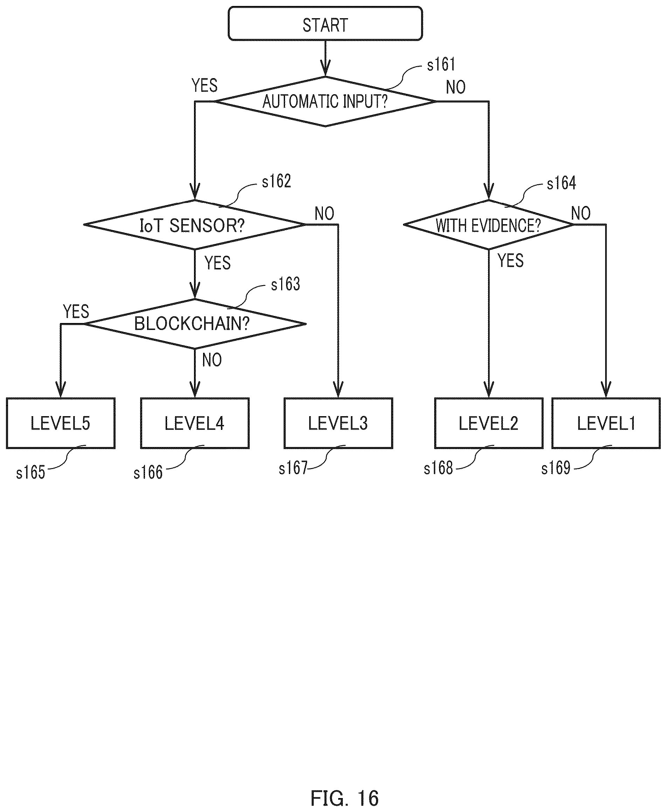

For example, Fig. 16 is a flowchart exemplifying a setting process of the trust score and the corresponding criteria performed by the trust evaluation table analysis and generation program 16 with respect to the attribute "DATA", the classification "TRANSPARENCY", and the sub-classification "TRACEABILITY".

The trust evaluation table analysis and generation program 16 determines whether an element using "AUTOMATIC INPUT" is included in the criterion 405 of the trust evaluation table 400 (s161). If the element using "AUTOMATIC INPUT" is included in the criterion 405 of the trust evaluation table 400 (YES in s161), the trust evaluation table analysis and generation program 16 executes processing in s162. If the element using "AUTOMATIC INPUT" is not included in the criterion 405 of the trust evaluation table 400 (NO in s161), the trust evaluation table analysis and generation program 16 executes processing in s164.

In s162, the trust evaluation table analysis and generation program 16 determines whether an element using "IoT SENSOR" is included in the criterion 405 of the trust evaluation table 400. If the element using "IoT SENSOR" is included in the criterion 405 of the trust evaluation table 400 (YES in s162), the trust evaluation table analysis and generation program 16 executes processing in s163. If the element using "IoT SENSOR" is not included in the criterion 405 of the trust evaluation table 400 (NO in s162), the trust evaluation table analysis and generation program 16 executes processing in s167.

In s163, the trust evaluation table analysis and generation program 16 determines whether an element using "BLOCKCHAIN" is included in the criterion 405 of the trust evaluation table 400. If the element using "BLOCKCHAIN" is included in the criterion 405 of the trust evaluation table 400 (YES in s163), the trust evaluation table analysis and generation program 16 executes processing in s168. If the element using "BLOCKCHAIN" is not included in the criterion 405 of the trust evaluation table 400 (NO in s163), the trust evaluation table analysis and generation program 16 executes processing in s166.

In s165, the trust evaluation table analysis and generation program 16 sets "Level 5" in the level 404 of the trust evaluation table 400.

In s166, the trust evaluation table analysis and generation program 16 sets "Level 4" in the level 404 of the trust evaluation table 400.

In s167, the trust evaluation table analysis and generation program 16 sets "Level 3" in the level 404 of the trust evaluation table 400.

In s164, the trust evaluation table analysis and generation program 16 determines whether an element using "EVIDENCE" is included in the criterion 405 of the trust evaluation table 400. If the element using "BLOCKCHAIN" is included in the criterion 405 of the trust evaluation table 400 (YES in s164), the trust evaluation table analysis and generation program 16 executes processing in s168. If the element using "BLOCKCHAIN" is not included in the criterion 405 of the trust evaluation table 400 (NO in s164), the trust evaluation table analysis and generation program 16 executes processing in s169.

In s168, the trust evaluation table analysis and generation program 16 sets "Level 2" in the level 404 of the trust evaluation table 400.

In s169, the trust evaluation table analysis and generation program 16 sets "Level 1" in the level 404 of the trust evaluation table 400.

As described above, the trust evaluation table analysis and generation program 16 determines whether each element is included in the criterion 405 of the trust evaluation table 400. In this way, the trust score corresponding to the presence or absence of the element can be determined, and accordingly, the correspondence between the corresponding criterion and the trust score can be identified. The correspondence between the element and the trust score may be, for example, determined based on a predetermined database in advance or determined by processing (symbol processing, natural language processing, or the like) data content of the criterion 405 and the level 404 of the trust evaluation table 400.

As has been described, the common trust management calculator 10 (data control assistance system) according to the present embodiment acquires the trust evaluation table 400 from each of the plurality of data cooperation bases 20 that store the trust evaluation tables 400 for determining control content for the target data to be transmitted and received between the data provider calculators 30 and the data user calculators 40; generates, based on each of the acquired trust evaluation tables 400 and the category table 600, a trust evaluation table 400 that includes the acquired trust evaluation tables 400 and that is based on the category table 600; and transmits the generated new trust evaluation table 400 to each data cooperation base 20.

That is, the data control assistance system according to the present embodiment generates (updates) the new trust evaluation table 400 including the trust evaluation table 400 of each data cooperation base 20. Thus, each data cooperation base 20 can determine the control content for the target data with common criterion using the generated trust evaluation table 400.

As described above, even when a determination criterion for control of transmission/reception of data differs among systems, the data control assistance system according to the present embodiment can assist in enabling appropriate control of transmission/reception of data among such systems.

According to the present embodiment, the category table 600 includes the evaluation item for the evaluation target of at least one of the target user, target system, and the data attribute as the evaluation category for the trustworthiness of the target data, and the data control assistance system generates the new trust evaluation table 400 based on the evaluation item for the evaluation target.

Thus, each data cooperation base 20 can objectively and clearly determine the trustworthiness of the target data based on the person, organization, system, thing, attribute of data, or the like with respect to the distribution of data. This allows the appropriate control of the transmission/reception of data.

According to the present embodiment, the category table 600 includes, as the evaluation category related to the trustworthiness of the target data, at least one evaluation item among the following evaluation items related to the evaluation target: the transparency evaluation item; the quality evaluation item; the certainty evaluation item; the safety evaluation item; the responsibility evaluation item; and the sincerity evaluation item. The data control assistance system generates the new trust evaluation table 400 based on the above-described evaluation item.

Thus, each data cooperation base 20 can evaluate the evaluation target in a multifaceted and objective manner with respect to the distribution of data. This allows the appropriate control of the transmission/reception of data.

The data control assistance system according to the present embodiment identifies, among the evaluation rules of the generated new trust evaluation table 400, information required to determine the control content for the data (policy) that is missing from the trust evaluation table 400 received from the data cooperation base 20 and transmits information (missing information) for identifying the identified information to the data cooperation base 20.

In this way, the data cooperation base 20 can collect information related to the policy required to control transmission/reception of the target data using the new trust evaluation table 400.

The data cooperation base 20 in the data control system 1 according to the present embodiment calculates the trust score related to the new trust evaluation table 400 based on the received missing information.

In this way, the data cooperation base 20 can appropriately evaluate the target data using the new trust evaluation table 400.

The data cooperation base 20 in the data control system 1 according to the present embodiment controls the transmission/reception of the target data based on the calculated trust score.

In this way, the data cooperation base 20 can appropriately control the transmission/reception of the target data based on the trust score.

The data cooperation base 20 in the data control system 1 according to the present embodiment accepts input of information on trust evaluation and stores the input information on the trust evaluation in the trust evaluation table 400.

In this way, the trust evaluation table 400 including appropriate content can be created.

The present invention is not limited to the embodiments described above, and the present invention may be implemented using any elements without departing from the gist of the present invention. The embodiments and modifications described above are merely exemplary, and the present invention is not limited thereto as long as the features of the invention are not impaired. Although various embodiments and modifications have been described above, the present invention is not limited to the content of the embodiments or modifications. Other embodiments conceivable within the technical scope of the present invention are also included in the present invention.

For example, part of the hardware included in each device of the present embodiment may be provided in another device.

Each program of each device may be provided in another device. A given program may include a plurality of programs. A plurality of programs may be integrated into a single program.

The evaluation targets and the evaluation items described in the present embodiment are merely illustrative. The evaluation targets or the evaluation items are not limited to those described in the present embodiment.

According to the present embodiment, a determination target of whether to distribute the target data or the distribution method of the target data is the trustworthiness (trust evaluation) of the target data. However, the present invention can also be applied to the case where a different target is evaluated (for example, evaluation of a usage purpose of the target data, evaluation of the conditions of the contract concluded between the data user and the data provider related to the target data, evaluation of an enterprise related the target data, evaluation of a protection level of the target data, or evaluation of a data leakage risk of the target data).

According to the present embodiment, the data user calculator 40 collects data based on the missing information. However, the data distribution control calculator 50 may collect the data and transmit the collected data to the data user calculator 40.

According to the present embodiment, the data distribution control calculator 50 causes the target data to be transmitted when the trust score for a certain evaluation category exceeds the trust evaluation threshold. However, the data distribution control calculator 50 may cause the target data to be transmitted only when the trust scores for predetermined evaluation categories (for example, all the evaluation categories) exceed the trust evaluation threshold.

According to the present embodiment, the data distribution control calculator 50 controls the transmission/reception control of the target data by determining whether to transmit or receive the data. However, the data distribution control calculator 50 may perform another type of control. For example, the data distribution control calculator 50 may perform control in which predetermined processing is performed on the target data.

### Reference Signs List

- 1: data control system
- 10: common trust management calculator
- 20: data cooperation base
- 30: data provider calculator
- 40: data user calculator
- 50: data distribution control calculator

## Claims

1. A data control assistance system comprising:
a storage device configured to store one or more evaluation categories for data; and
a control device configured to execute
an evaluation rule acquisition process that acquires respective evaluation rules, from a plurality of data transmission/reception control systems, the data transmission/reception control systems including a plurality of information processing devices each storing an evaluation rule for determining control content for data to be transmitted and received among the plurality of information processing devices,
an evaluation rule analysis and generation process that generates a new evaluation rule based on each of the acquired evaluation rules and the evaluation categories, the new evaluation rule including each of the acquired evaluation rules and being based on the evaluation categories, and
an evaluation rule transmission process that transmits the generated new evaluation rule to each of the data transmission/reception control systems.

2. The data control assistance system according to claim 1,
wherein the storage device includes, as the evaluation category relative to trustworthiness of the data, an evaluation item for at least one of evaluation targets including an entity managing the data, a system managing the data, and an attribute of the data, and
wherein, in the evaluation rule analysis and generation process, the control device generates the new evaluation rule based on the evaluation item for the evaluation target.

3. The data control assistance system according to claim 2,
wherein the storage device includes, as the evaluation category related to the trustworthiness of the data, at least one evaluation item of the evaluation target including transparency, quality, certainty, safety, responsibility content, and sincerity, and
wherein, in the evaluation rule analysis and generation process, the control device generates the new evaluation rule based on the evaluation item for the evaluation target.

4. The data control assistance system according to claim 1,
wherein the control device executes a missing information analysis process that identifies, in the generated new evaluation rule, information that is missing in the evaluation rule received from the data transmission/reception control system and which is required to determine control content for the data, the missing information analysis process transmitting the identified information to the data transmission/reception control system.

5. A data control system comprising:
a plurality of data transmission/reception control systems that include a plurality of information processing devices, the plurality of data transmission/reception control systems each storing an evaluation rule for determining control content for data to be transmitted and received among the plurality of information processing devices;
a storage device configured to store one or more evaluation categories for data; and
a data control assistance system including a control device configured to execute
an evaluation rule acquisition process that acquires, from each of the plurality of data transmission/reception control systems, the evaluation rule,
an evaluation rule analysis and generation process that generates a new evaluation rule based on each of the acquired evaluation rules and the evaluation categories, the new evaluation rule including each of the acquired evaluation rules and being based on the evaluation categories, and
an evaluation rule transmission process that transmits the generated new evaluation rule to each of the data transmission/reception control systems.

6. The data control system according to claim 5,
wherein the data transmission/reception control system calculates a score related to the new evaluation rule based on the information received.

7. The data control system according to claim 5,
wherein the data transmission/reception control system controls the transmission/reception of data based on the calculated score.

8. The data control system according to claim 5,
wherein the data transmission/reception control system accepts input of the evaluation rule and executes an evaluation rule input process that stores the input evaluation rule.

9. A data control assistance method,
wherein an information processing device is configured to store one or more evaluation categories for data and execute:
an evaluation rule acquisition process that acquires respective evaluation rules from a plurality of data transmission/reception control systems, the data transmission/reception control systems including a plurality of information processing devices and each storing an evaluation rule for determining control content for data to be transmitted and received among the plurality of information processing devices,
an evaluation rule analysis and generation process that generates a new evaluation rule based on each of the acquired evaluation rules and the evaluation categories, the new evaluation rule including each of the acquired evaluation rules and being based on the evaluation categories, and
an evaluation rule transmission process that transmits the generated new evaluation rule to each of the data transmission/reception control systems.
